# EUROPEAN PATENT APPLICATION

(11) **EP 1 992 497 A2**
(43) Date of publication of application: **19.11.2008**
(21) Application number: 07122747.4
(22) Date of filing: 10.12.2007
(51) Int. Cl.: B43K 8/02

(54) **Writing instrument comprising an aqueous glittery ink**

(30) Priority: 15.05.2007 IT TO20070336
(71) Applicant: Reinol S.p.A., 10071 Borgaro Torinese (Torino) (IT)
(72) Inventor: Buzzetti, Massimiliano, 10100 Torino (IT); Trimboli, Valter, 10144 Torino (IT)
(74) Representative: Freyria Fava, Cristina

(57) **Abstract**

Writing instrument (1) comprising a body (2) inside which is housed an ink tank (5) made of fibrous material having a density between 0.08 and 0.20 g/cm³, a writing tip (4) made of fibrous material having a density below 0.6 g/cm³ in fluid connection with said ink tank (5) and an aqueous ink comprising:
- a dye in a concentration between 0.1 and 20% by weight;
- a glycol in a concentration between 1 and 20% by weight;
- a glittery pigment essentially consisting of aluminium oxide platelets coated with metal oxides in a concentration between 0.1 and 20% by weight;
- a binder in a concentration between 0.1 and 30% by weight;
- a surfactant in a concentration between 0.1 and 20% by weight;
- a preservative in a concentration between 0.1 and 20% by weight; and
- water in a concentration between 10 and 70% by weight.

## Description

The present invention relates to a writing instrument that employs an aqueous glittery ink. Over recent years the chemical industry has continually been developing new pigments and, in particular, pigments with the ability to reflect light and to sparkle, for application in widely varying fields, from paints to cosmetics to the graphic arts.

Light-reflecting pigments are generally made of metallic powder, that is of metal particles with granulometry in the order of microns, and having different surface structures than the normal colouring pigments known to technology.

The use in the graphic arts and, in particular, in the production of writing instruments of these glittery metallic pigments, however, presents some difficulties of application. Indeed, due to their specific weight and their chemico-physical properties, the metal particles tend to form a deposit of agglomerated particles that are difficult to disperse and, an even more significant drawback, that tend to clog the writing tip of the writing instrument because of their dimensions.

The present invention has as its purpose that of providing a writing instrument that can use new inorganic-oxide based glittery pigments, thus resolving the drawbacks associated to the use of these pigments.

According to the present invention, this purpose is achieved thanks to the solution described specifically in the attached claims. The claims form an integral part of the technical instruction provided here in connection with the invention.

The invention concerns a writing instrument comprising a container, within which is housed an ink tank comprising a filter of fibrous material provided with capillaries, and a writing tip of fibrous material in fluid connection with the tank, capable of enabling the transfer of the aqueous ink containing pigments based on glittery inorganic oxides to the writing surface.

The invention will now be described in detail, as a simple non-limiting example, with reference to the single attached drawing that illustrates an embodiment at present preferred of the writing instrument according to the present invention.

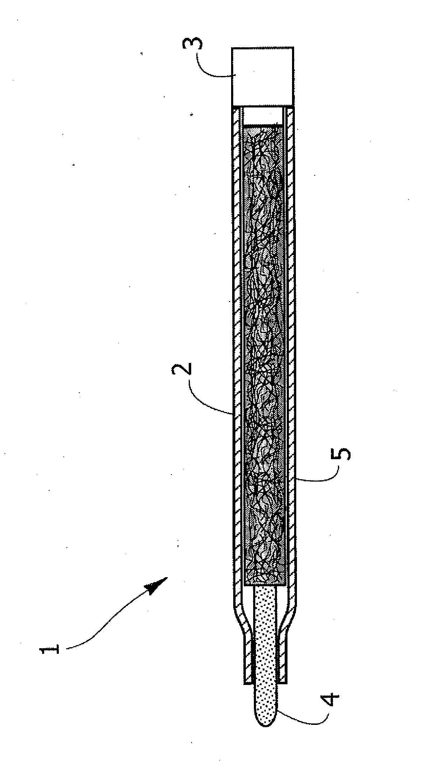

The drawing shows in diagram form a writing instrument 1 according to the present invention. The writing instrument 1 comprises a body 2 closed by a closing device 3 at one of its ends, an ink tank 5 housed inside the body 2 and a writing tip 4 at the opposite end of the body to that of the closing device 3. The writing tip 4 is in fluid connection with the ink tank 5, so as to enable the ink to flow from the tank 5 to the writing surface.

The writing tip 4 is made of fibrous material and presents capillaries of dimensions in the order of 10-20 micron to enable the glittery pigment present in the ink to flow from the ink tank 5 to the writing surface. The writing tip 4 presents a density preferably below 0.6 g/cm³.

The ink tank 5 is made of fibrous material and presents capillaries of dimensions in the order of 10-20 micron and a density within the range 0.08-0.20 g/cm³.

In an embodiment at present particularly preferred, both the writing tip 4 and the ink tank 5 are made of polyester-based material.

The glittery pigments used in the writing device according to the present invention consist of platelets of aluminium oxide coated with metal oxides. These particles present a relatively close granulometric distribution in the interval between 10 and 30 micron. The aluminium oxide platelets are produced through synthesis and subsequently coated with metal oxides. These pigments can reflect and/or refract the light incident on them. In particular, they can give rise to a sparkling and/or glittery effect, when they present a granulometry such as to determine essentially a reflection of the light with little deviation.

The ink used in the writing instrument according to the present invention comprises, as well as the metal particles giving it the glittery effect, a dye that gives the basic colour to the ink, a binder, a surfactant and a preservative. Table 1 gives indications concerning the composition of the glittery ink that can be used to advantage in the sphere of the present invention.

**Table 1.**

| **Component** | **Quantity (% by weight)** |
|---|---|
| Dye | 0.1-20 |
| Glycol | 1-20 |
| Metallic pigment | 0.1-20 |
| Binder | 0.1-30 |
| Surfactant | 0.01-5 |
| Preservative | 0.01-0.3 |
| Water | 10-70 |

Table 2 shows the composition of a specific embodiment of a glittery ink according to the present invention.

**Table 2.**

| **Component** | **Quantity (% by weight)** |
|---|---|
| Dye | 5 |
| Glycerine | 10 |
| Metallic pigment | 7 |
| Acrylic resin | 5 |
| Ether lauryl sulphate | 0.10 |
| Methylparaben (E218) | 0.10 |
| Monopropylene glycol | 5 |
| Water | to 100 |

Naturally, details of construction and forms of embodiment may vary including widely with regard to what is described and illustrated, without thereby departing from the sphere of protection of the present invention, as defined by the attached claims.

## Claims

1. Writing instrument (1) comprising a body (2) within which is housed an ink tank (5) made of fibrous material having a density between 0.08 and 0.20 g/cm³, a writing tip (4) made of fibrous material having a density below 0.6 g/cm³ in fluid connection with said ink tank (5) and an aqueous ink comprising:
- a dye in a concentration between 0.1 and 20% by weight;
- a glycol in a concentration between 1 and 20% by weight;
- a glittery metallic pigment essentially consisting of aluminium oxide platelets coated with metal oxides in a concentration between 0.1 e 20% by weight;
- a binder in a concentration between 0.1 and 30% by weight;
- a surfactant in a concentration between 0.1 and 20% by weight;
- a preservative in a concentration between 0.1 and 20% by weight; and
- water in a concentration between 10 and 70% by weight.

2. Writing instrument according to claim 1, in which said metal oxide platelets consist of aluminium oxide.

3. Writing instrument according to claim 2, in which said aluminium oxide platelets are coated with metal oxides.

4. Writing instrument according to any of the claims from 1 to 3, in which said metal platelets present a granulometry between 10 and 30 micron.

5. Writing instrument according to any of the above claims, in which the glycol is selected from among ethylene glycol and propylene glycol.

6. Writing instrument according to any of the above claims, in which the writing tip 4 presents internal capillaries.

7. Writing instrument according to any of the above claims, in which the ink tank 5 presents internal capillaries.

8. Writing instrument according to any of the above claims, in which said fibrous material has a polyester base.
